# EUROPEAN PATENT SPECIFICATION

(11) **EP 0 213 210 B1**
(45) Date of publication and mention of the grant of the patent: **19.10.1994**
(21) Application number: 86901498.5
(22) Date of filing: 20.02.1986
(51) Int. Cl.: G05B 19/21

(54) **APPARATUS FOR DETECTING QUANTITY OF ROTATION OF ROTARY SHAFT**
GERÄT ZUM NACHWEIS DER ROTATIONSMENGE EINER ACHSE
DETECTEUR DE LA QUANTITE DE ROTATION D'UN ARBRE ROTATIF

(30) Priority: 21.02.1985 JP 23907/85 U
(43) Date of publication of application: 11.03.1987
(73) Proprietor: TOYOTA JIDOSHA KABUSHIKI KAISHA, Aichi-ken 471 (JP); KABUSHIKI KAISHA TOYOTA CHUO KENKYUSHO, Aichi-gun Aichi-ken, 480-11 (JP)
(72) Inventor: ITO, Yoshizumi, 1, Toyota-cho, Toyota-shi Aichi-ken 471 (JP); ISHIGURO, Yasuo, 1, Toyota-cho, Toyota-shi Aichi-ken 471 (JP); SHIROSHITA, Osamu K. K. Toyota Chuo Kenkyusho, Aichi-gun Aichi-ken 480-11 (JP)
(74) Representative: Grams, Klaus Dieter, Dipl.-Ing.
(86) International application number: PCT/JP86/00081
(87) International publication number: WO 86/05011

(56) References cited:
- EP-A- 0 067 232
- DE-A- 3 009 939
- JP-A- 5 348 285
- JP-A-57 111 606
- US-A- 4 085 890
- PATENT ABSTRACTS OF JAPAN vol. 8, no. 72 (P-265) 1509 04 April 1984,& JP-A-58 217005

## Description

### TECHNICAL FIELD

This invention relates to a rotation detection apparatus for detecting the amount of rotation of a rotational output axis driven rotationally.

### BACKGROUND ART

Actuators for rotating rotational axis, and controller for carrying out complicated controls such as a numerical control of rotation and a feed back control in response to the rotational speed, have been proposed.

For example, when an arm of a robot for industrial use rotates to some predetermined angle, predetermined operation such as welding or deburring may be executed. Rotation detection of a rotational axis is an indispensable technique today, and a lot of automatic controls are used and a lot of devices have been developed. Especially prevailing are those using digital technique, since they are quite precise in controlling and since the prices of digital circuits are going down. In it pulse signals in response to a rotational angle by a rotary encoder, etc. are received and rotation of the rotational axis is determined by a count of the pulse numbers.

There are an absolute type and an incremental type of encoders.

Absolute type encoders are capable of detecting the rotation on the spot of switch-on, but expensive. Incremental type encoders are cheap, but incapable of detecting the rotation on the spot on switch-on, and it is necessary to provide an origin (zero point) by some apparatus. Once origin is given, rotation after that can be detected by detecting relative rotation from that point and by integration.

Today ,incremental encoders are more often used as rotation detectors, because of the inexpensiveness, and when a lot of encoders are required, incremental encoders are more often used.

Detection of the zero point of the rotational axis is indispensable to the incremental type encoder as a rotation detector. One method for that, which is known from JP-A-58-217005, is to detect a specific position of the output axis by a position detection sensor and to determine the origin when an origin signal, which is output once every one rotation of the incremental type encoder provided at an input axis connected to the output axis via a reduction gear, coincides with a position signal generated by the position detection sensor.

Such rotation detectors for the rotational axis, however, are not sufficient enough when a rotational axis rotates a lot, since following problems remain.

The absolute type rotation detector has a finite detection capacity and cannot detect the rotation of a rotational axis rotating infinitely.

Incremental type rotation detectors are much more often used when infinite rotations of the rotational axis are detected, but the following origin-determination is required.

When a rotational axis rotates finitely, one point in that limited rotation is taken as an origin, but when a rotational axis rotates infinitely, precise origin determination cannot be obtained even if a special position on an output axis is taken as an origin.

Thus, an origin on the input axis does not necessarily coincide with that on the output axis even when the output axis is on the origin determination position since rotation is detected at an input axis. In case of reduction ratio 1.1, for example, to reassure the origin by rotating the output axis more than once, the position to be detected by the position detection sensor cannot be detected except when there is specific relation (every ten turns of the output axis), since with an output once per turn of the rotational axis, the output origin signal is generated by the rotation detection sensor once per 1/1.1 turn.

As can be seen in this case, when higher rotation is required, inorder to set an origin in switching on or off, the output axis is demanded to be rotated till simultaneous output of the origin signal of both position detection sensor and rotation detector can be gained.

However, in general, since a reduction ratio is large and its decimal part is long, considerable rotation is required to gain an origin determination position.

The pulse signals from the rotary encoder are continuously input as long as the rotational axis rotates. An overflow always occurs at some point, since the counting capacity is not infinite.

Thus, the rotation of the rotational axis was conventionally detected during a limited rotation of the rotational axis, such as for example one clockwise or anticlockwise turn. This characteristic has affected the operation of the robot in its efficiency, since the mode of operation must have been limited. For example, when applying to a robot for industrial use, to rotate the arm anticlockwise by one operation and further anticlockwise by the next operation, the arm must be returned to the original position by rotating after the first operation before proceeding to the next operation. This is one of the factors that generate a vicious influence and decreases moving efficiency of a robot.

It is the object of this invention to provide an improved rotation detection apparatus which can detect the rotation precisely even when the rotational axis rotates one way and at high speed to solve those aforementioned problems.

### DISCLOSURE OF THE INVENTION

The construction of this invention resides in a rotation detection apparatus for solving the problems and includes the features of the only claim.

The reduction gear in this invention receives input rotation from a driving source, for example a motor, and rotates the output axis at integer reduction ratio. Thus, the most simple example of this is the one which has reduction mechanism with spur gears having integer teeth ratio. The position detection means, for example a sensor, is included in the output axis system which is driven by the output axis and provides an output axis position signal at every turn of the output axis. The output axis position signal is output at every appearance of some characteristics attached to some arbitrary point on the output axis, for example, a reflecting disk or a magnet, at some fixed position of the output axis.

The rotational angle detection means, for example a sensor, outputs an output axis rotation signal in response to the rotation angle of the input axis. The input axis rotates integer times per every turn of the output axis due to the operation of the reduction gear. Thus the output axis rotation signal from the rotational angle detection sensor is always output plural times per every turn of the output axis while the output axis position signal generated by the position detection sensor is output once every turn of the output axis. This invention is intended to provide coincide of the output axis position signal and one of the output axis rotation signals, namely the "origin output" by previously regulating these two signals.

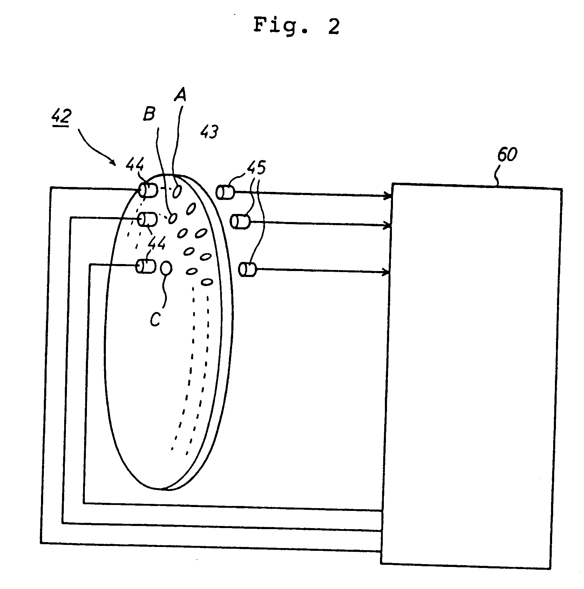

For example, when a conventional rotary encoder is used as a rotational angle detection means, many detector holes (phase A, phase B, see Fig.2) drilled along concentric circles with a phase difference are used to determine the rotation, while an output generated by a single detector hole drilled on another circle (phase C, see Fig.2) is designed to be provided in synchcronism with the position signal.

The control means comprise a well-known counter etc., which countup or countdown whenever a position signal and an output angle rotation signal generated by the position detection sensor and the rotational angle detection sensor are input, and counts rotation of the rotational output axis.

### BRIEF DESCRIPTION OF THE DRAWING

Fig. 1 is a brief diagram showing an construction of a rotary table including a rotation detection apparatus embodying the present invention.
Fig. 2 is a construction of a rotary encoder.
Fig. 3 is a phase diagram illustrative of the output of a proximity sensor and the rotary encoder.
Fig. 4 is a brief diagram illustrative of the application of this embodiment to a robot for industrial use.

### BEST MODE OF CARRYING OUT THE INVENTION

If one way rotation is continually kept going after switching-on, the counter overflows, since counting infinitely is impossible. Continuous rotation without overflow, however, can be obtained if the counter is reset by replacement of the origin before overflow.

However, a complicated and time-consuming operation which is resumed after determining the origin to that new position by replacement of the origin is required, since the hitherto practiced origin determination is only possible at a predetermined origin determination point.

According to the invention, the control means is so constituted as to divide the rotation value or count C detected by the rotational angle detection sensor into nxCo, the multiple of n and Co, where n is an integer factor and the value or count Co of the rotational angle detection sensor corresponds to one turn of the output axis, and a fraction m (whose absolute value is below Co); to compare the integer factor n of the value Co detected by the rotational angle detection sensor with a coefficient ℓ which corresponds to the count limit of the counter of the control means; and to replace the count of the counter with the fraction m at the time when the integer n exceeds the coefficient ℓ.

The following operation by the following expression for the fraction m, is also available.$\text{m = C - F (C/Co) x Co}$
where F(C/Co) is an integer obtained by half-adjust of the fraction of the quotient C/Co.

Referring now to the detailed description of the present invention and the embodiment.

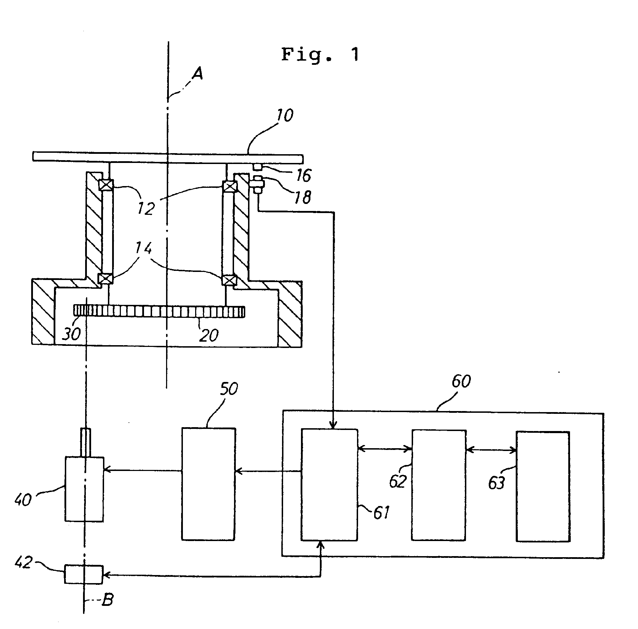

Fig. 1 shows the brief diagram of a rotary table including an embodiment of the rotation detection apparatus of the invention. In the drawings, 10 denotes the table of the rotary table, integrated into the upper portion of a large spur gear 20 and pivotally supported by two bearings 12 and 14 with the central axis A. The large spur gear 20 is in gear with the small spur gear 30 and the gear ratio of large and small gears is 8 : 1. A motor 40 rotates the small spur gear 30 around the central axis B. 50 denotes a drive circuit which drives the motor 40 by armature current. Also provided are two sensors. One of them is a position detection sensor comprising a magnet 16 which is a to-be-detected member put on one point on the lower surface of the table and a proximity switch 18 which provides an electronic control means 60 with its output signal by the motion of an inner armature iron strip morable when the magnet approaches. The other is a rotary encoder 42 provided at the rotational axis of the motor 40 and forming a rotational angle detection means. Detailed construction of the rotary encoder 42 is shown in Fig. 2. As is illustrated in this Fig., the rotary encoder 42 comprises a disk 43 which has light-passing holes on three different concentric circles, of which phase A and phase B with many holes on the outermost and on the middle circles, respectively, have the phase difference of 1 : 4 to detect the direction of the rotation of the disk 43 and the amount of its rotation. A phase C on an innermost circle with only one hole is to detect the rotary position of disk 43. Opposing on either side of this disk 43 are the light emitting portions 44 and the light receiving portions 45 for each of the phases. While the light emitting portions 44 emit light through an output provided by the electronic control circuit 60 and while the disk 43 rotates, an output signal is generated at the light receiving portions 45 and is output to the electronic control means 60 when either of the light-passing holes reaches a position where the light emitting portions 44 and the light receiving portions 45 are in the opposite positions.

The electronic control means 60 in Fig. 1 includes an input and output port 61 which receives outputs of the proximity switch 18 and the rotary encoder 42, and provides control signals to the drive circuit 50 and the rotary encoder 42, a counter 62 which counts up or counts down inputs through the input and output port 61 and a counter control circuit 63 which controls the contents of the counter 62.

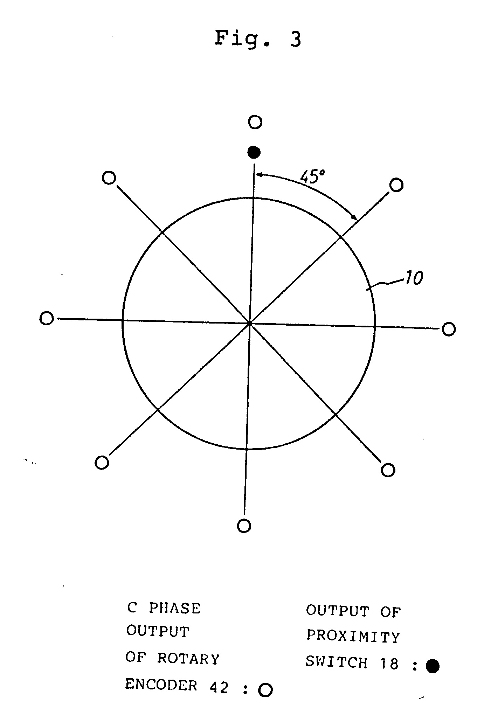

The phases of the two sensors are determined to generate the detection output of the rotation detection apparatus of this embodiment as shown in Fig.3. Since 8 turns of the small spur gear 30 are required for one turn of the table 10, output of phase C of the rotary encoder 42 is every 360°/8 = 45°. The proximity switch 18 provided at the table 10 which outputs once every turn, is predetermined to output simultaneously with either of the outputs of the rotary encoder 42. In some limited rotation angle around the table 10, output of the proximity switch 18 might continuously occur, but an output of the phase C within that limit is only once. Thus the phase of the sensor is quite precisely determined.

The rotation of the table 10 is detected by the rotation detection apparatus in the following manner.

First, the position of simultaneous outputs of the rotary encoder 42 and the proximity switch 18 in Fig. 3 is selected for operational origin of the table 10. When the table 10 begins to rotate from this operational origin, the rotational angle of the table 10 is counted up by the counter 62 with high preciseness determined by the numbers of the light-passing holes of phases A and B and by the fact that the disk 43 of the rotary encoder 42 rotates once every 45° turn of the table 10. Holes in phases A and B are digged with phase difference of 1:4 as mentioned above, and the reverse rotation of the table 10, where the counter 62 counts down, can be also detected.

The preciseness of the rotational angle detection of the table 10 by means of the counter 62 is eight times better than that gained by a rotary encoder at the table, since the table 10 turns once every 8 turn of the rotary encoder.

For the determination of the origin, the position of the origin on the output axis is detected only once every turn of the output axis by detecting the phase C output of the rotary encoder 42 and the output of the proximity switch 18. Since the reduction ratio is an integer, after switching off of the electronic control means after many turns of the output axis at some arbitrary position, the same point on the output axis can be obtained at re-determination of the origin.

After some turns of the table 10 like this, overflow of the counter 62 may occur, since the capacity of it is not infinite. However, the counter control circuit 63 always replaces the contents of the counter 62 with the result of the following equation. Namely the content of the counter 62 is replaced with the calculated residual fraction m (m = C - n x Co), where n is a half-adjust of the fraction of the quotient C/Co. (C is the content of the counter 62 and Co is the value or count of the rotary encoder 42 output every one turn of the table 10.)

Accordingly the content of the counter 62 is updated to the value meaning the rotation angle of ±180° from the operational origin.

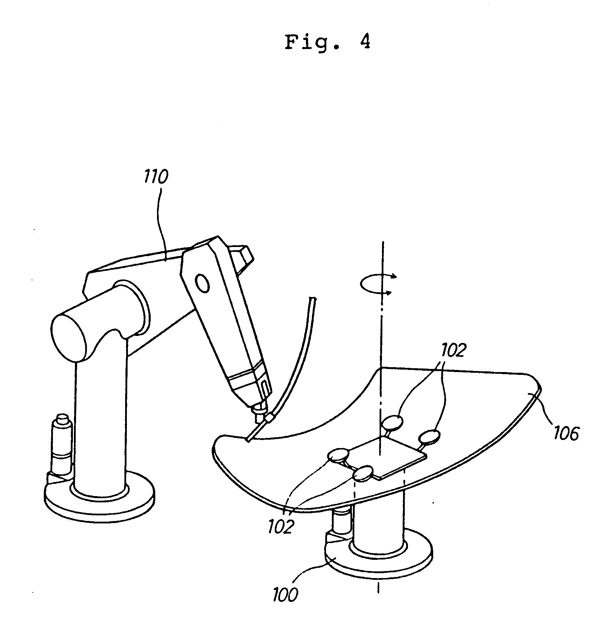

Fig. 4 shows one application of this rotary table system to which the rotation detection apparatus of the embodiment is attached.

In the drawing, 100 denotes the rotary table with 4 acetabulums 102 on it. 106 denotes a window glass for a vehicle to be dealt with, fixed on the table by the acetabulums 102. While the window glass 106 rotates once by the rotary table, a tool for the application of an adhesive agent, carried by an arm of a robot 110, is moved properly to accomplish the application of the adhesive agent along the whole frame of window glass 106.

## Claims

1. A rotation detection apparatus for detecting the amount of rotation of a rotational output axis (A) comprising;
a reduction gear (20, 30), having an input axis which is connected to a rotational axis of a driving source (40);
a position detection means (16, 18) connected to said output axis of said reduction gear (20, 30) for generating an output axis position signal once every turn of the said output axis;
a rotational angle detection means (42) provided at the said input axis for detecting the rotation value C of the said input axis and providing in response an output axis rotation signal representing the said amount of rotation of the said output axis, the said rotational angle detection means also producing an input axis position signal (phase C) for every turn of the said input axis, this being arranged to occur simultaneously with each said output axis position signal; and
a control means (60) responsive to the said output axis position signal, the said output axis rotation signal and the said input axis position signal for counting the said amount of rotation of the said output axis,
Characterised in that:
the reduction gear (20, 30) has an integer reduction ratio;
the said control means (60) separates the said input rotation value C into parts n.Co and m:
where:
Co is the value of the said rotation angle detection means equal to one turn of the said output axis
n is an integer
m is a residual fraction with an absolute value less than that of Co;
the said control means compares the ratio C/Co with a coefficient ℓ corresponding to the count limit of the said control means, and replaces C with m when n exceeds ℓ

## Patentansprüche

1. Rotationserfassungsgerät zum Erfassen des Rotationsbetrages einer Abtriebsrotationsachse (A), mit
einem Untersetzungsgetriebe (20, 30), das eine Antriebsachse aufweist, welche mit einer Rotationsachse einer Antriebsquelle (40) verbunden ist,
einer Positionserfassungseinrichtung (16, 18), die mit der Abtriebsachse des Untersetzungsgetriebes (20, 30) verbunden ist, um bei jeder Umdrehung der Abtriebsachse einmal ein Abtriebsachsen-Positionssignal zu erzeugen,
einer Rotationswinkel-Erfassungseinrichtung (42), die an der Antriebsachse geschaffen ist, um den Rotationswert C der Antriebsachse zu erfassen und in Antwort darauf ein Abtriebsachsen-Rotationssignal zu schaffen, das den Rotationsbetrag der Abtriebsachse repräsentiert, wobei die Rotationswinkel-Erfassungseinrichtung bei jeder Umdrehung der Antriebsachse auch ein Antriebsachsen-Positionssignal (Phase C) erzeugt, wobei dies derart vorgesehen ist, daß es gleichzeitig mit jedem Abtriebsachsen-Positionssignal auftritt, und
einer Steuereinrichtung (60), die zum Zählen des Rotationsbetrages der Abtriebsachse auf das Abtriebsachsen-Positionssignal, das Abtriebsachsen-Rotationssignal und das Antriebsachsen-Positionssignal anspricht,
dadurch gekennzeichnet, daß
das Untersetzungsgetriebe (20, 30) ein ganzzahliges Untersetzungsverhältnis hat,
die Steuereinrichtung (60) den Eingangsrotationswert C in Anteile n.Co und m teilt,
wobei
Co der Wert der Rotationswinkel-Erfassungseinrichtung ist, der gleich einer Umdrehung der Abtriebsachse ist,
n eine ganze Zahl ist,
m eine Restbruchzahl mit einem Absolutwert ist, der kleiner als der von Co ist,
wobei die Steuereinrichtung das Verhältnis C/Co mit einem Koeffizienten ℓ vergleicht, welcher der Zählbegrenzung der Steuereinrichtung entspricht, und C durch m ersetzt, wenn n ℓ übersteigt.

## Revendications

1. Un appareil de détection de rotation pour détecter l'angle de rotation d'un axe de sortie de rotation (A) comprenant:
- un train réducteur (20, 30), ayant un axe d'entrée qui est relié à un axe de rotation d'une source d'entraînement (40);
- des moyens de détection de position (16, 18) reliés audit axe de sortie dudit train réducteur (20, 30) pour générer un signal de position de l'axe de sortie à chaque tour dudit axe de sortie;
- des moyens de détection d'angle de rotation (42) prévus sur ledit axe d'entrée pour détecter la valeur de rotation C dudit axe d'entrée et fournissant en réponse un signal de rotation d'axe de sortie représentant ladite valeur de rotation dudit axe de sortie, lesdits moyens de détection d'angle de rotation émettant également un signal de position de l'axe d'entrée (phase C) à chaque tour dudit axe d'entrée, ceci étant agencé pour se produire simultanément à chacun desdits signaux de position d'axe; et
- des moyens de commande (60) sensibles audit signal de position de l'axe de sortie, audit signal de rotation de l'axe de sortie et audit signal de position de l'axe d'entrée pour compter ladite valeur de rotation dudit axe de sortie,
caractérisé en ce que:
le train réducteur (20, 30) présente un rapport de réduction qui est un entier;
lesdits moyens de commande (60) séparent ladite valeur de rotation introduite C en éléments n.Co et m, où:
- Co représente la valeur desdits moyens de détection d'angle de rotation qui est égale à un tour dudit axe de sortie.
- n est un entier.
- m est une fraction résiduelle ayant une valeur absolue inférieure à celle de Co;
lesdits moyens de commande comparent le rapport C/Co avec un coefficient ℓ correspondant à la limite de comptage desdits moyens de commande et remplace C par m lorsque n dépasse ℓ.
